# FASCICULE DE BREVET EUROPEEN

(11) **EP 2 372 198 B1**
(45) Date de publication et mention de la délivrance du brevet: **17.10.2012**
(21) Numéro de dépôt: 11157336.6
(22) Date de dépôt: 08.03.2011
(51) Int. Cl.: F16H 63/30, F16H 61/18, F16H 63/34, F16H 63/20

(54) **Système de commande pour une boite de vitesses, ensemble de commande comprenant un tel système et véhicule**
Steuersystem für Getriebe, Steueranordnung mit einem solchen Steuersystem und Fahrzeug
Control system for a gearbox, control arrangement comprising such a system and vehicle

(30) Priorité: 19.03.2010 FR 1051979
(43) Date de publication de la demande: 05.10.2011
(73) Titulaire: Peugeot Citroën Automobiles SA, 78140 Vélizy-Villacoublay (FR)
(72) Inventeur: Ploe, Pierre, 92800, PUTEAUX (FR); Pomas, Stéphane, 59530, Ruesnes (FR)

(56) Documents cités:
- EP-A1- 0 893 628
- FR-A1- 2 669 391
- FR-A1- 2 924 777
- GB-A- 2 037 914
- US-A- 1 951 876

## Description

La présente invention est relative à un système de commande pour une boîte de vitesses de véhicule, notamment de véhicule automobile.

En particulier l'invention est relative à un tel système comprenant des noix de commande qui sont prévues pour être reliées à des fourchettes de la boîte de vitesses et un système de désengagement sécurisé du rapport de marche avant le plus élevé de la boîte de vitesses.

Un exemple de ce genre de système est connu du document FR2924777 qui divulgue les caractéristiques du préamble de la revendication 1. Dans le système de ce document, un basculeur embarque un système de cliquet destiné à éviter le passage accidentel du rapport de marche arrière lors du passage du cinquième rapport au quatrième rapport de la boîte de vitesses. Le système de désengagement sécurisé du rapport de marche avant le plus élevé de la boîte de vitesses est relativement complexe et nécessite un ensemble de pièces réalisées et montées avec une grande précision pour être fiable.

La présente invention a notamment pour but de proposer une alternative simplifiée par rapport aux systèmes de l'art antérieur en évitant la dégradation de la boîte de vitesses lors des changements de rapport.

A cet effet, l'invention a pour objet un système de commande pour une boîte de vitesses de véhicule, notamment de véhicule automobile, conforme à l'objet de la revendication 1.

Selon un mode de réalisation du système, le bras escamotable est au repos et est dégagé de l'organe de butée quand la noix de commande permettant de déplacer la fourchette du rapport le plus élevé occupe une position correspondant à l'état engagé dudit rapport le plus élevé.

Selon un mode de réalisation du système, le bras escamotable est solidaire de l'une parmi la pièce d'actionnement à sélection et la noix de désengagement et en ce que l'organe de butée est solidaire de l'autre parmi la pièce d'actionnement à sélection et la noix de désengagement.

Selon un mode de réalisation du système, la noix de désengagement est montée mobile par pivot sur la noix de commande permettant de déplacer la fourchette du rapport le plus élevé, un organe de rappel tendant ramener la noix de désengagement à sa position de désengagement.

Selon un mode de réalisation du système, la noix de commande permettant de déplacer la fourchette du rapport le plus élevé comporte un étrier. Dans ce mode de réalisation, au désengagement dudit rapport élevé, tant l'aile de blocage qui appartient à la noix de désengagement que le doigt de commande occupent l'étrier, l'aile de blocage occupant l'emplacement que prend le doigt de commande à l'engagement de la marche arrière et doigt de commande étant en correspondance d'un couloir de point mort des noix de commande.

Selon un mode de réalisation du système :
- le mécanisme de commande d'engagement et de désengagement de rapports est un dispositif d'interverrouillage pouvant sélectivement actionner l'une desdites noix de commande pour déplacer l'une des fourchettes à l'engageant ou au dégageant d'un rapport et verrouiller les autres noix de commande au point mort ;
- le dispositif d'interverrouillage comprend d'une part le doigt de commande des noix de commande et d'autre part une clé d'interverrouillage dans laquelle se débat le doigt de commande, la clé d'interverrouillage pouvant verrouiller les noix de commande et constituant la pièce d'actionnement à sélection de rapport.

Selon un mode de réalisation du système, le bras escamotable est monté mobile par pivot sur l'une parmi la clé d'interverrouillage et la noix de désengagement, un organe de rappel tendant ramener le bras escamotable au repos.

Selon un mode de réalisation du système, le bras escamotable est solidaire de la noix de désengagement et l'organe de butée est solidaire de la clé d'interverrouillage.

Selon un mode de réalisation du système, le bras escamotable est sous forme de came.

Par ailleurs, l'invention a également pour objet un ensemble de commande pour une boîte de vitesses de véhicule, comportant un levier destiné à être dans un habitacle de véhicule et pouvant se débattre dans un même plan à l'engagement ou au dégagement du rapport de marche arrière et du rapport de marche avant le plus élevé. Cet ensemble comporte un système conforme à l'invention, dans lequel la pièce d'actionnement à sélection est reliée au levier et dans lequel le doigt de commande se débat dans un même plan à la commande d'engagement ou de dégagement du rapport de marche arrière et du rapport de marche avant le plus élevé.

Par ailleurs, l'invention a également pour objet un véhicule comportant une boîte de vitesses à commande manuelle par un levier monté dans un habitacle du véhicule et pouvant se débattre d'une part dans un même plan à l'engagement ou au dégagement du rapport de marche arrière et du rapport de marche avant le plus élevé, et d'autre part dans un plan parallèle adjacent pour les deux rapports de marche avant immédiatement inférieurs au rapport le plus élevé. Dans ce véhicule, le levier appartient à un ensemble de commande conforme à l'invention pour interdire un passage accidentel de la marche arrière lors d'un changement de vitesses du rapport de marche avant le plus élevé vers son rapport immédiatement inférieur.

D'autres buts, caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue en perspective d'un système de commande de changement de rapports selon l'invention, dans son environnement comprenant un bras de commande, des tringles, des fourchettes associées à des noix de commande et un levier basculeur de marche arrière ;
- la figure 2 est une vue en perspective, montrant les noix de commande du système de la figure 1 ;
- la figure 3 est une vue de dessus d'une noix de désengagement appartenant à un système de désengagement du rapport le plus élevé de la boîte de vitesses, ce système de désengagement faisant partie du système de commande de la figure 1 ;
- la figure 4 est une vue du type de la figure 3, montrant le système de désengagement au point mort des rapports de la boîte de vitesses ;
- la figure 5 est une vue du type des figures 3 et 4, montrant le système de désengagement à la sélection du cinquième rapport de marche avant ou de la marche arrière ;
- la figure 6 est une vue du type des figures 3 à 5, montrant le système de désengagement lorsque la marche arrière est engagée ;
- la figure 7 est une vue du type des figures 3 à 6, montrant le système de désengagement lorsque le cinquième rapport de marche avant est engagé ;
- la figure 8 est une vue du type des figures 3 à 7, montrant le système de désengagement lors du désengagement du cinquième rapport de marche avant.

Sur les différentes figures, les mêmes références désignent des éléments identiques ou similaires.

Dans la description qui va suivre, un repère est indiqué pour faciliter la lecture. La direction désignée X sur le repère est dite longitudinale, la direction désignée Y est dite transversale, la direction désignée Z est dite verticale. Dans le véhicule, les composants de la boîte de vitesses peuvent être orientés différemment de l'orientation indiquée sur les figures.

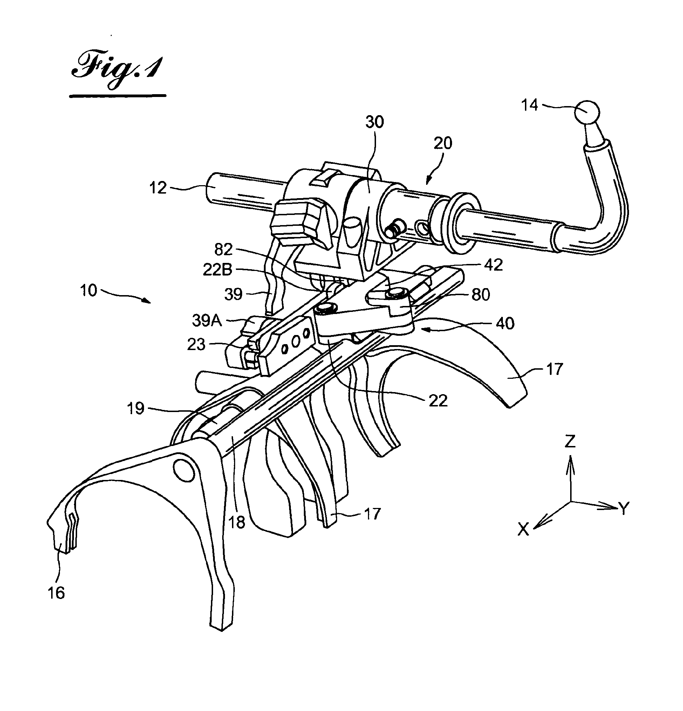

A la figure 1 sont illustrées les pièces principales constituant un système de commande 10 de changement de rapports d'une boîte de vitesses à cinq rapports de marche avant et un rapport de marche arrière. Le système de commande 10 est opérant pour une boîte de vitesses manuelle dont un levier de changement de vitesses situé dans l'habitacle du véhicule est guidé selon une grille de débattement ayant un emplacement de rapport de marche arrière en face de l'emplacement du cinquième rapport de marche avant, le levier de changement de vitesse étant dans des positions adjacentes quand la marche arrière ou le quatrième rapport de marche avant sont engagés.

Parmi ces pièces principales, en entrée du système de commande 10, un bras de commande 12 est commandé par le conducteur par l'intermédiaire du levier de changement de vitesses qui est situé dans l'habitacle et qui actionne des câbles dont l'un, non représenté, est fixé à l'extrémité libre 14 du bras de commande 12.

Parmi ces pièces principales, en sortie du système de commande 10, des fourchettes 16, 17 sont supportées par des tringles 18, 19 pour faire translater des éléments de synchroniseur permettant d'accoupler en rotation des pignons fou de la boîte de vitesses à leur arbre ou de les découpler.

Entre le bras de commande 12 et les fourchettes 16, 17, le système de commande 10 de changement de rapports comporte un dispositif d'interverrouillage 20 commandé directement par le bras 12. Il comporte aussi des noix de commande 22, 23 qui sont commandées directement par le dispositif d'interverrouillage 20 pour commander les fourchettes 16, 17.

Les noix de commande 22, 23 sont soit solidaires de leur fourchette 16, 17 quand cette dernière est montée coulissante sur sa tringle, soit solidaires de leur tringle 18, 19 sur laquelle est montée fixement la fourchette 16, 17 correspondante. Ce dernier cas est celui de la noix référencée 22 sur les figures, cette noix 22 étant fixée à la tringle 18 sur laquelle est fixée la fourchette 16 qui est utilisée pour engager et dégager le cinquième rapport de la boîte de vitesses. Les noix de commande référencées 23 sur les figures servent pour les rapports 1 à 4 de la boîte de vitesses et elles permettent d'actionner les fourchettes référencées 17 sur les figures. La noix 23 directement adjacente à la noix 22 sert pour la commande des rapports 3 et 4 de la boîte de vitesses.

Chaque noix de commande 22, 23 comporte un étrier déterminant un logement interne entre une âme sensiblement horizontale et deux branches s'étendant sensiblement verticalement dans un plan longitudinal.

Les branches verticales 23A des étriers des noix de commande 23 déterminent un logement interne ayant une première longueur. Les branches 23A sont alignées au point mort de la boîte de vitesses, les logements internes des étriers déterminant un couloir transversal de point mort. Les branches 23A sont décalées dans la direction X quand l'un des rapports 1 à 4 est engagé.

Les branches verticales 22A et 22B de l'étrier de la noix de commande 22 déterminent un logement interne ayant une deuxième longueur supérieure à la première longueur. La branche référencée 22A sur les figures sert pour l'engagement du cinquième rapport de la boîte de vitesses. La branche référencée 22B sur les figures sert pour dégager le cinquième rapport et pour sécuriser le passage du cinquième rapport vers le quatrième rapport en étant en relation avec une noix de désengagement 42 comme il sera expliqué plus en détail ultérieurement.

Le dispositif d'interverrouillage 20 sert à commander les noix 22, 23 par action sur les branches 22A, 22B, 23A des étriers. Il constitue un mécanisme de commande d'engagement et de désengagement de rapports.

Le dispositif d'interverrouillage 20 comporte une clé d'interverrouillage 30 dont un corps est assemblé avec le bras de commande 12 en pouvant se déplacer transversalement avec le bras 12 et en pouvant tourner par rapport au bras 12. Ledit corps ne peut pas tourner avec le bras 12 car il est maintenu par le carter de la boîte de vitesses. Parmi ses fonctions, la clé d'interverrouillage 30 assure la fonction de pièce d'actionnement à sélection de rapport, en constituant une pièce de verrouillage des rapports non sélectionnés.

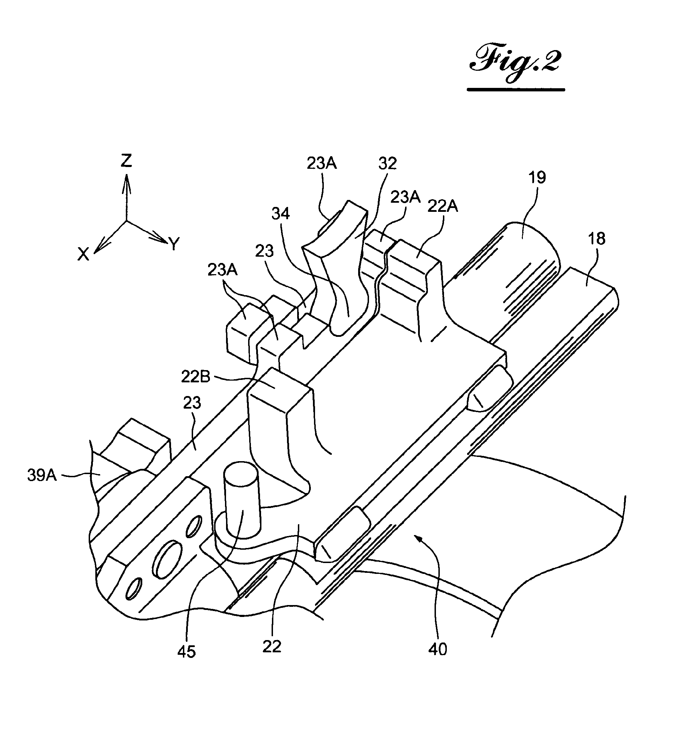

Le corps de la clé d'interverrouillage 30 comporte, à sa partie inférieure, des bossages 31 (figures 2 et 4 à 8) déterminant des rainures de forme complémentaire à la forme de nervures aménagées à l'extrémité libre des branches 22A, 22B, 23A des étriers pour sélectivement bloquer ces derniers ou autoriser leur translation en fonction du rapport de la boîte de vitesses à commander.

Le dispositif d'interverrouillage 20 comporte aussi un doigt de commande de passage de vitesse 32 qui sert à l'engagement et au dégagement de rapports en déplaçant les noix 22, 23. Le doigt 32 de commande comporte une extrémité supérieure fixée au bras de commande 12 pour pouvoir tourner et se translater avec ledit bras, le doigt 32 tournant dans le corps de la clé d'interverrouillage 30. A son extrémité inférieure, le doigt 32 comporte une tête 34 qui peut pivoter et se translater dans les logements des étriers pour les actionner sélectivement en fonction du rapport de la boîte de vitesses à commander.

Le système de commande 10 comporte aussi un basculeur de marche arrière pour engrener des pignons de marche arrière. Le basculeur, non représenté aux figures, est commandé par un levier basculeur 39 en forme de fourche qui est solidaire du doigt 32. Le levier basculeur 39 actionne aussi au passage de la marche arrière un loquet 39A de freinage d'arbre de boîte de vitesses. Ce type de basculeur, levier basculeur et loquet est connu du document FR2734879.

Le système de commande 10 comporte, en outre, un système de désengagement 40 du rapport le plus élevé de la boîte de vitesses, en l'espèce le cinquième rapport.

Le système de désengagement 40 comporte une noix de désengagement 42 montée à pivotement sur la noix de commande 22. La noix de désengagement 42 est utilisée d'une part pour engager et dégager le cinquième rapport de la boîte de vitesses et d'autre part pour sécuriser le passage du cinquième rapport vers le quatrième rapport en évitant un passage intempestif de la marche arrière.

La noix de désengagement 42 est constituée principalement par une plaque globalement en forme de V dont les deux embranchements sont environ à trente degrés.

La noix de désengagement 42 comporte, à l'extrémité libre de l'un des embranchements du V, une aile de blocage 43 ayant un pan coupé 43A orienté vers l'intérieur du V. La longueur de l'aile de blocage 43, additionnée à la longueur de la tête 34 du doigt 32, correspond sensiblement à la longueur de l'étrier de la noix 22.

Un évidemment 42A est creusé sur une partie de l'épaisseur de la noix de désengagement 42, à la pointe du V. Cet évidement est sensiblement sur la moitié de la pointe, dans l'embranchement ayant l'aile de blocage 43.

La plaque constituant la noix de désengagement 42 est montée sur la noix de commande 22 en étant orientée de manière que l'aile de blocage 43 soit orientée en direction de l'étrier de ladite noix 22, dans lequel ladite aile peut rentrer. Le pan coupé 43A de l'aile de blocage 43 est orienté en regard d'un pan coupé 22C qui est aménagé sur la branche 22B de la noix 22 et qui est orienté vers l'intérieur de l'étrier de la noix 22.

La noix de désengagement 42 comporte, à l'extrémité libre de l'autre des embranchements du V, un pivot 45 qui permet le pivotement de la noix de désengagement 42 sur la noix de commande 22. Le pivot 45 est constitué par un axe solidaire de la noix de commande 22, emmanché dans un perçage de la noix de désengagement 42.

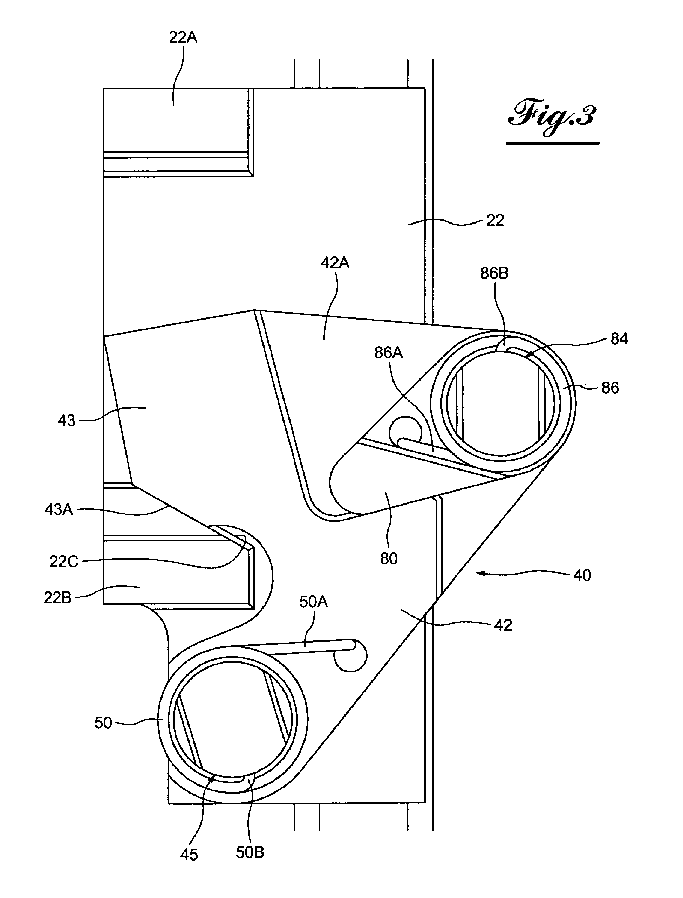

La plaque constituant la noix de désengagement 42 peut pivoter par rapport à la noix de commande 22 sur laquelle elle est montée en étant rappelée élastiquement par un ressort 50 de type ressort de torsion cylindrique à spires ayant une patte d'extrémité 50A ancrée dans la plaque constituant la noix de désengagement 42 (figure 3) et une patte d'extrémité 50B solidaire de l'axe du pivot 45.

Le ressort 50 tend à rappeler la plaque vers une position de repos dans laquelle la noix de désengagement 42 est en appui sur la branche 22B. La plaque est poussée par le ressort 50 vers les noix de commande 23 qui servent pour les rapports 1 à 4. Dans cette position de repos, l'aile de blocage 43 est engagée dans le logement interne de l'étrier de la noix de commande 22 qui est associée à la fourchette de commande du cinquième rapport.

Le système de désengagement sécurisé 40 du rapport de marche avant le plus élevé comprend un bras escamotable en forme de came 80 et un organe de butée 82 qui sont à l'interface entre la clé d'interverrouillage 30 et la noix de désengagement 42. Dans la description qui va suivre, le bras escamotable en forme de came 80 sera désigné par « came 80 ».

La came 80 est montée mobile par pivot 84 dans l'évidemment 42A de la noix de désengagement 42. La came 80 est en saillie de la surface supérieure de la noix de désengagement, côté clé d'interverrouillage 30. A cet effet, la came 80 comporte un perçage emmanché dans un axe appartenant à la noix de désengagement 42. Un ressort 86 tend à ramener la came 80 au repos vers l'intérieur du V de la noix de désengagement 42, en butée contre un bord de l'évidemment 42A. Le ressort 86 est de type ressort de torsion cylindrique à spires ayant une patte d'extrémité 86A ancrée dans la came 80 (figure 3) et une patte d'extrémité 86B solidaire de l'axe du pivot 84.

L'organe de butée 82 est, comme les bossages 31, une nervure aménagée à la partie inférieure de la clé d'interverrouillage 30. L'organe de butée 82, solidaire de la clé d'interverrouillage 30, est situé en regard de la noix de désengagement 42. Suivant les mouvements d'actionnement de la clé d'interverrouillage 30, l'organe de butée 82 peut être soit séparé de la came, en la laissant être au repos, soit au contact de la came 80, pour la pousser.

Le fonctionnement du système de commande de changement de rapport 10 ressort déjà en partie de la description qui précède et va maintenant être détaillé.

Quand la boîte de vitesses est au point mort, les noix 22, 23, le doigt de passage de vitesses 32 et le système de désengagement 40 sont dans la position de repos représentée aux figures 1 à 4.

Au point mort, les branches 23A des étriers 23 sont alignées. La branche 22A servant pour l'engagement du cinquième rapport est alignée avec les branches 23A adjacentes. L'étrier de la noix 23, qui est adjacente à la noix 22 et qui sert pour le troisième rapport et le quatrième rapport de la boîte de vitesses, reçoit la tête 34 du doigt 32. La tête 34 n'appuie pas sur les branches 23A.

Au point mort, la plaque constituant la noix de désengagement 42 est en position de repos décrite ci-dessus. L'organe de butée 82 est positionné le long de la branche 22B de la noix de commande 22. L'organe de butée 82 est positionné transversalement en face de l'extrémité libre de la came 80, en étant séparé de cette dernière.

Pour commencer à passer le cinquième rapport ou le rapport de marche arrière à partir du point mort, ces deux rapports étant en face l'un de l'autre sur la grille du levier de vitesses situé dans l'habitacle, le conducteur du véhicule actionne tout d'abord le levier de changement de vitesses selon un mouvement de sélection.

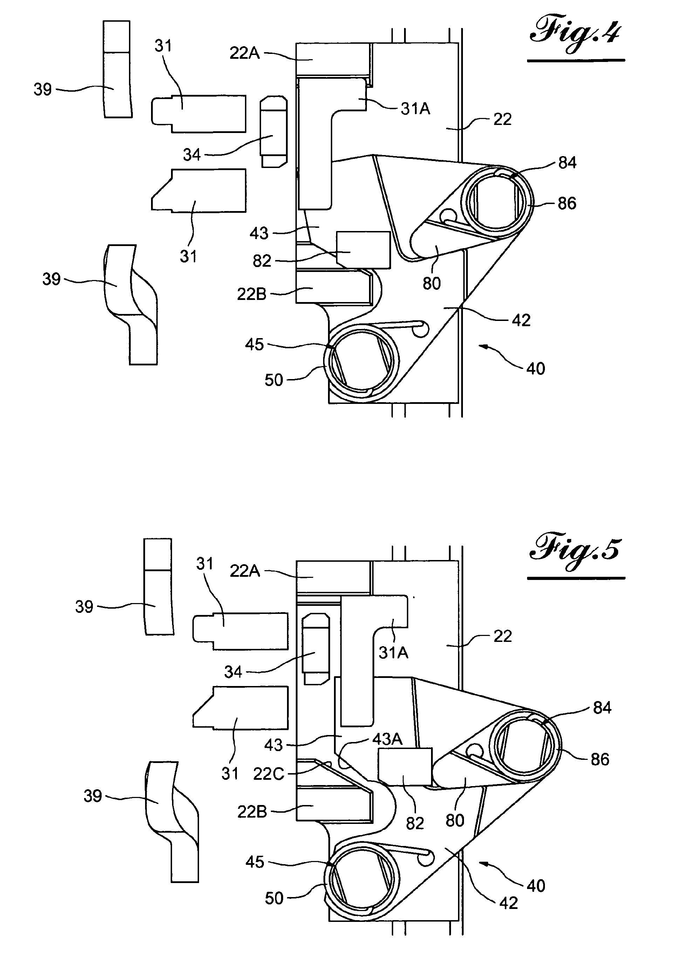

Ce mouvement de sélection entraîne la translation du bras 12 qui translate selon l'axe Y la clé d'interverrouillage 30 et le doigt 32 dans la position de sélection de cinquième rapport et de marche arrière représentée à la figure 5. La tête 34 du doigt 32 vient dans le logement interne de l'étrier de la noix 22. Simultanément, l'organe de butée 82 vient au contact de l'extrémité libre de la came 80 qui demeure au repos, puis il continue sa translation transversale en poussant la came 80 qui demeure au repos et transmet cette poussée à la plaque constituant la noix de désengagement 42. Cette poussée, à l'encontre de la force du ressort de rappel 50, fait tourner ladite noix de désengagement 42. L'aile de blocage 43 est alors hors de l'étrier de la noix 22, la plaque étant dans une position transversalement décalée dite de sélection.

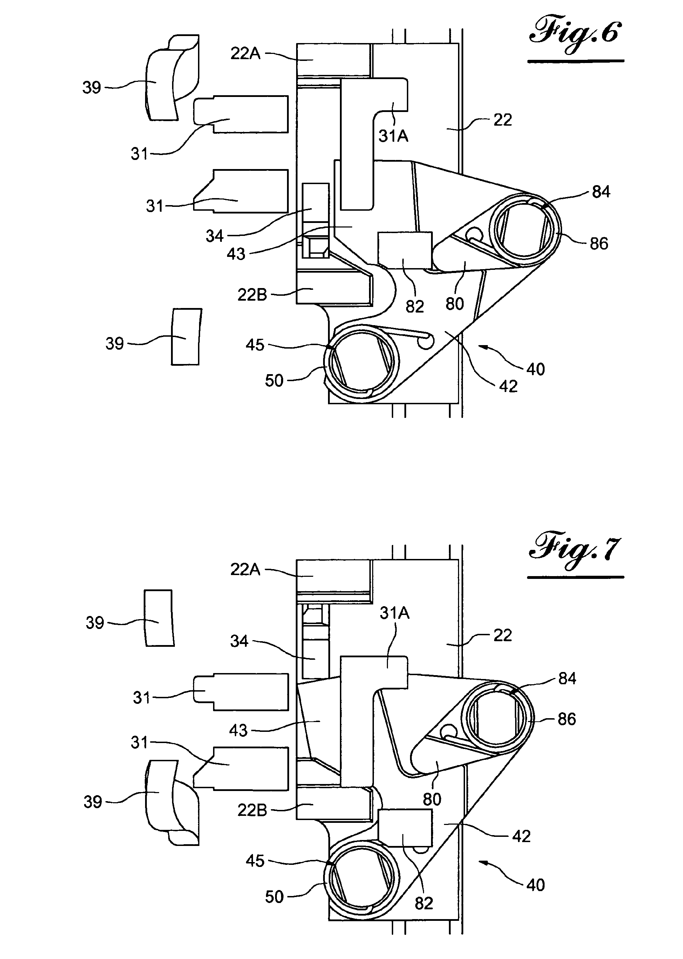

Pour finir de passer le rapport de marche arrière, le conducteur du véhicule pivote ensuite le levier de vitesses selon un mouvement d'engagement qui entraîne le pivotement du bras 12, ce qui pivote le levier basculeur 39 engrenant les pignons de marche arrière via le basculeur et actionne simultanément le loquet 39A. Le pivotement du bras 12 fait aussi pivoter le doigt 32 dont la tête 34 vient en position dite de marche arrière en se déplaçant dans l'étrier de la noix 22, comme représenté à la figure 6.

La noix 22 et la noix 42 ne se déplacent pas car la tête 34 est distante de la branche 22B et ne l'actionne donc pas. La tête 34, libre de débattement, glisse le long de la face d'extrémité libre de l'aile 43, entre cette dernière et la branche 23A adjacente. La noix 42 reste dans sa position transversalement décalée. En effet, l'appui mutuel de l'organe de butée 82 et de la came 80 est conservé, tout comme la position de repos de la came 80.

Lors du dégagement de la marche arrière, les mouvements de la clé d'interverrouillage 30 et de la clé 32 sont inversés et la boîte de vitesses revient au point mort (figure 4). L'appui mutuel de l'organe de butée 82 et de la came 80 n'est pas conservé. Ainsi, la noix de désengagement 42 revient à sa position de repos sous l'action de ressort de rappel 50 quand le doigt 32 revient dans l'étrier de la noix 23 adjacente à la noix 22. La came 80 reste au repos sous l'action de son ressort de rappel 86.

Pour finir de passer le cinquième rapport, après la sélection de rapport telle que décrite ci-dessus en relation avec la figure 5, le conducteur du véhicule actionne le levier de vitesses selon un mouvement d'engagement qui pivote le bras 12 et pivote le doigt 32. Ce pivotement entraîne le décalage de la tête 34 longitudinalement dans le plan de la noix 22. Lors de son décalage, la tête 34 appuie sur la branche 22A et déplace la noix 22 selon l'axe X dans sa position de cinquième rapport engagé, telle que représentée à la figure 7.

Le déplacement longitudinal de la noix 22, lors de l'engagement du cinquième rapport de la boîte de vitesses, entraîne un déplacement longitudinal de la came 80 qui perd le contact avec l'organe de butée 82 par décalage longitudinale. La noix de désengagement 42 se rabat alors dans sa position initiale en butée sur la branche 22B.

Lors de l'engagement du cinquième rapport de la boîte de vitesses, le décalage de la tête 34 longitudinalement dans le plan de la noix 22 entraîne le coulissement de la ladite tête 34 par rapport à l'aile de blocage 43 de la noix de désengagement 42, jusqu'à perte de contact de la tête et l'aile 43. La noix de désengagement 42 revient à sa position de repos sous l'action de son ressort de rappel 50. En effet, l'étrier de la noix 22 détermine un espace libre en regard de l'aile 43. L'aile 43 vient donc se positionner dans l'étrier de la noix 22 en étant calée entre la tête 34 et la branche 22B.

Pour changer de rapport en rétrogradant du cinquième rapport au quatrième rapport, sans risquer de passer accidentellement en marche arrière, il faut désengager le cinquième rapport pour revenir au point mort, puis engager le quatrième rapport.

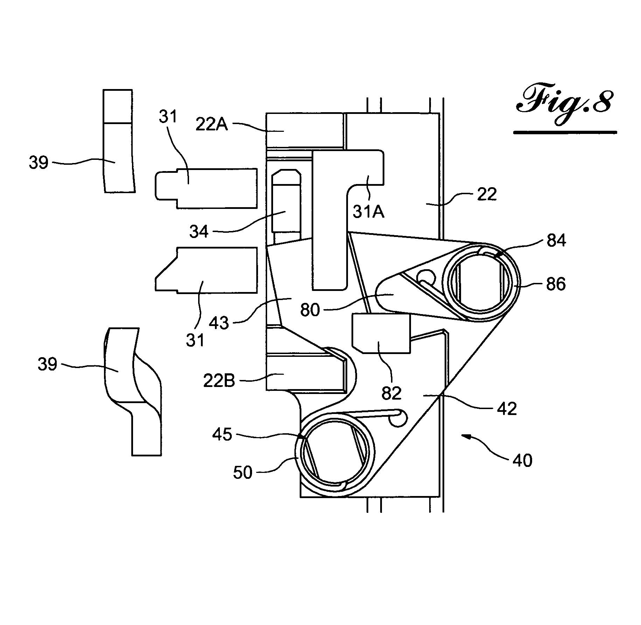

A début du désengagement du cinquième rapport, comme représenté à la figure 8, la tête 34 du doigt 32 et l'aile 43 de la noix de désengagement 42 sont calés dans l'étrier de la noix 22 et font coulisser cette dernière sur une course déterminée par exemple par l'arrêt de la branche 22A sur le bossage 31A qui s'étend longitudinalement.

La noix de désengagement 42, au repos, est dans une position de désengagement du cinquième rapport, avec appui sur la branche 22B, en particulier par appui du pan coupé 43A sur le pan coupé 22C. Compte tenu d'une part du blocage de la tête 34 entre l'aile de blocage 43 et la branche 22A de l'étrier, et d'autre part, simultanément, de l'appui de la branche 22A sur le bossage 31A, la tête 34 ne peut pas aller dans sa position de marche arrière, tout en permettant l'action voulue de dégagement de rapport pour actionner la fourchette 16.

Du fait du coulissement de la noix 22 lors du dégagement du cinquième rapport de la boîte de vitesses, la came 80 se déplace longitudinalement et revient au contact de l'organe de butée 82. La came 80 passe alors à en position escamotée, à l'encontre de la force de son ressort de rappel 86. De plus, la came 80 en appui avec l'organe de butée 82 empêche tout pivotement accidentel de la noix de désengagement 42 lors du retour au point mort après désengagement du cinquième rapport de marche avant.

A la fin du désengagement du cinquième rapport, sous l'action du bras de commande 12, la tête 34 du doigt 32, qui se déplace selon la direction transversale Y, revient au point mort dans l'étrier de la noix 23 adjacente à la noix 22. Ladite tête 34 est ainsi prête pour être décalée avec la noix 23 à l'engagement du quatrième rapport de la boîte de vitesses, sans risque d'engagement de la marche arrière.

Lors de ce retour au point mort, le déplacement transversal de la tête 34 du doigt 32 est effectué par le déplacement transversal de la clé d'interverrouillage 30 dont l'organe de butée 82 se sépare de la came 80. L'organe de butée 82 devient alors transversalement décalée par rapport à la came 80 qui repasse alors au repos, sous l'action de son ressort de rappel 86.

Avantageusement, l'aile de blocage 43 interdit à la tête 34 doigt de commande 32 d'occuper l'emplacement qu'elle occupe à l'engagement de la marche arrière. Ainsi, l'aile de blocage 43 aménagée sur la noix de désengagement 42 permet l'actionnement de la noix correspondante 22 pour dégager le cinquième rapport, tout comme la sécurisation du retour au point mort, sans risque d'activer la marche arrière.

Avantageusement, l'organe de butée 82 permet tant l'actionnement de la noix de désengagement 42 via la came 80 lorsque les rapports de cinquième et de marche arrière sont sélectionnés, que le verrouillage de la noix 22 avec le bossage 31A lorsque les rapports de première, seconde, troisième ou quatrième sont sélectionnés.

Avantageusement, le système de commande selon l'invention permet d'éviter d'utiliser une grille de sélection de rapports ayant un décalage d'une demi-sélection du couloir de marche arrière par rapport au couloir de cinquième rapport.

En variante non représentée, sans changement dans le fonctionnement du système de commande, le montage est inversé pour l'organe de butée et de la came constituant le bras escamotable. L'organe de butée est solidaire de la noix de désengagement et la came est solidaire de la clé d'interverrouillage.

En variante non représentée, l'organe de butée est solidaire d'un élément du système de commande qui n'est pas la clé d'interverrouillage elle même, mais toute pièce qui se déplace en sélection de rapports de boîte de vitesses. Le montage inversé ci-dessus envisagé reste possible, avec d'une part la came constituant le bras escamotable étant alors solidaire de cette pièce qui est équivalente à la clé d'interverrouillage et d'autre part l'organe de butée étant alors solidaire de la noix de désengagement.

En variante non représentée, le bras escamotable en forme de came est remplacé par tout levier pivotant, tout bras pivotant ou cliquet ou linguet qui, de manière équivalente, peut d'une part exercer l'entraînement à translation de la noix de désengagement et d'autre s'escamoter par pivotement.

## Revendications

1. Système de commande pour une boîte de vitesses de véhicule, comprenant des noix de commande (22, 23) qui sont prévues pour être reliées à des fourchettes (16, 17) de la boîte de vitesses et un système de désengagement sécurisé (40) du rapport de marche avant le plus élevé de la boîte de vitesses, tel que :
- un mécanisme de commande (20) d'engagement et de désengagement de rapports comporte au moins une pièce d'actionnement à sélection de rapport (30) et un doigt de commande (32, 34) des noix de commande (22, 23) à engagement et dégagement de rapport ;
- le système de désengagement sécurisé (40) dudit rapport le plus élevé comprend d'une part une noix de désengagement (42) qui est montée pivotante sur la noix de commande (22) permettant de déplacer la fourchette dudit rapport le plus élevé et d'autre part un organe de butée (82) et un bras escamotable (80) qui commandent la noix de désengagement (42) ; et
- le bras escamotable (80), au repos et au contact de l'organe de butée (82), permet à la noix de désengagement (42) d'occuper une position de sélection dudit rapport élevé ou de la marche arrière, sous la commande de la pièce d'actionnement à sélection de rapport (30),
**caractérisé en ce que** le bras escamotable (80), escamoté et au contact de l'organe de butée (82), permet à la noix de désengagement (42) d'occuper une position de désengagement dudit rapport le plus élevé, à laquelle le doigt de commande (32, 34) est au contact d'une aile de blocage (43) qui appartient à la noix de désengagement et qui interdit au doigt de commande, au désengagement dudit rapport élevé, d'occuper l'emplacement qu'il occupe à l'engagement de la marche arrière.

2. Système selon la revendication 1, **caractérisé en ce que** le bras escamotable (80) est au repos et est dégagé de l'organe de butée (82) quand la noix de commande permettant de déplacer la fourchette du rapport le plus élevé occupe une position correspondant à l'état engagé dudit rapport le plus élevé.

3. Système selon l'une quelconque des revendications précédentes, **caractérisé en ce que** le bras escamotable (80) est solidaire de l'une parmi la pièce d'actionnement à sélection (30) et la noix de désengagement (42) et **en ce que** l'organe de butée (82) est solidaire de l'autre parmi la pièce d'actionnement à sélection (30) et la noix de désengagement (42).

4. Système selon l'une quelconque des revendications précédentes, dont la noix de désengagement (42) est montée mobile par pivot sur la noix de commande (22) permettant de déplacer la fourchette du rapport le plus élevé, un organe de rappel (50) tendant ramener la noix de désengagement (42) à sa position de désengagement.

5. Système selon l'une quelconque des revendications précédentes, **caractérisé en ce que** la noix de commande (22) permettant de déplacer la fourchette du rapport le plus élevé comporte un étrier et **en ce que**, au désengagement dudit rapport élevé, tant l'aile de blocage (43) qui appartient à la noix de désengagement (42) que le doigt de commande (32, 34) occupent l'étrier, l'aile de blocage (43) occupant l'emplacement que prend le doigt de commande à l'engagement de la marche arrière et doigt de commande étant en correspondance d'un couloir de point mort des noix de commande.

6. Système selon l'une quelconque des revendications précédentes, dont :
- le mécanisme de commande d'engagement et de désengagement de rapports est un dispositif d'interverrouillage (20) pouvant sélectivement actionner l'une desdites noix de commande (22, 23) pour déplacer l'une des fourchettes (16, 17) à l'engageant ou au dégageant d'un rapport et verrouiller les autres noix de commande (22, 23) au point mort ;
- le dispositif d'interverrouillage (20) comprend d'une part le doigt de commande (32, 34) des noix de commande (22, 23) et d'autre part une clé d'interverrouillage (30) dans laquelle se débat le doigt de commande (32, 34), la clé d'interverrouillage (30) pouvant verrouiller les noix de commande et constituant la pièce d'actionnement à sélection de rapport.

7. Système selon les revendications 3 et 6, dont le bras escamotable (80) est monté mobile par pivot sur l'une parmi la clé d'interverrouillage (30) et la noix de désengagement (42), un organe de rappel (86) tendant ramener le bras escamotable (80) au repos.

8. Système selon la revendication 7, dont le bras escamotable (80) est solidaire de la noix de désengagement (42) et l'organe de butée (82) est solidaire de la clé d'interverrouillage (30).

9. Système selon l'une quelconque des revendications précédentes, dans lequel le bras escamotable (80) est sous forme de came.

10. Ensemble de commande pour une boîte de vitesses de véhicule, comportant un levier destiné à être dans un habitacle de véhicule et pouvant se débattre dans un même plan à l'engagement ou au dégagement du rapport de marche arrière et du rapport de marche avant le plus élevé, **caractérisé en ce qu'**il comporte un système conforme à l'une quelconque des revendications précédentes, dans lequel la pièce d'actionnement à sélection (20) est reliée au levier et dans lequel le doigt de commande (32, 34) se débat dans un même plan à la commande d'engagement ou de dégagement du rapport de marche arrière et du rapport de marche avant le plus élevé.

11. Véhicule comportant une boîte de vitesses à commande manuelle par un levier monté dans un habitacle du véhicule et pouvant se débattre d'une part dans un même plan à l'engagement ou au dégagement du rapport de marche arrière et du rapport de marche avant le plus élevé, et d'autre part dans un plan parallèle adjacent pour les deux rapports de marche avant immédiatement inférieurs au rapport le plus élevé, **caractérisé en ce que** le levier appartient à un ensemble de commande conforme à la revendication précédente pour interdire un passage accidentel de la marche arrière lors d'un changement de vitesses du rapport de marche avant le plus élevé vers son rapport immédiatement inférieur.

## Claims

1. A control system for a gearbox of a vehicle, comprising control arms (22, 23) which are provided to be connected to forks (16, 17) of the gearbox and a secured disengaging system (40) of the highest forward gear ratio of the gearbox, such that:
- an engagement and disengagement control mechanism (20) of ratios comprises at least one actuating part for ratio selection (30) and a control finger (32, 34) of the control arms (22, 23) for ratio engagement and disengagement;
- the secured disengagement system (40) of the said highest ratio comprises on the one hand a disengagement plate (42) which is pivotably mounted on the control arm (22) permitting the fork of the said highest ratio to be moved, and on the other hand a stop member (82) and a retractable arm (80) which control the disengagement plate (42); and
- the retractable arm (80), at rest and in contact with the stop member (82), permits the disengagement plate (42) to occupy a selection position of the said high ratio or of the reverse gear, under the command of the actuating part for ratio selection (30),
**characterized in that** the retractable arm (80), retracted and in contact with the stop member (82), permits the disengagement plate (42) to occupy a disengagement position of the said highest ratio, at which the control finger (32, 34) is in contact with a locking wing (43) which belongs to the disengagement plate and which prevents the control finger, on disengagement of the said high ratio, from occupying the position it occupies on the engagement of the reverse gear.

2. The system according to Claim 1, **characterized in that** the retractable arm (80) is at rest and is disengaged from the stop member (82) when the control arm, permitting the movement of the fork of the highest ratio, occupies a position corresponding to the engaged state of the said highest ratio.

3. The system according to any one of the preceding claims, **characterized in that** the retractable arm (80) is integral with one of the actuating part for selection (30) and the disengagement plate (42) and **in that** the stop member (82) is integral with the other of the actuating part for selection (30) and the disengagement plate (42).

4. The system according to any one of the preceding claims, of which the disengagement plate (42) is movably mounted by pivot on the control arm (22) permitting the fork of the highest ratio to be moved, a return member (50) tending to return the disengagement plate (42) to its disengagement position.

5. The system according to any one of the preceding claims, **characterized in that** the control arm (22) permitting the fork of the highest ratio to be moved comprises a stirrup and **in that**, on disengagement of the said high ratio, whilst the locking wing (43) which belongs to the disengagement plate (42) and the control finger (32, 34) occupy the stirrup, the locking wing (43) occupying the position which the control finger takes on the engagement of the reverse gear and control finger corresponding with a neutral gear passage of the control arms.

6. The system according to any one of the preceding claims, in which:
- the engagement and disengagement mechanism of ratios is an interlocking device (20) able to selectively actuate one of the said control arms (22, 23) to move one of the forks (16, 17) at the engaging or disengaging of a ratio and to lock the other control arms (22, 23) at neutral;
- the interlocking device (20) comprises on the one hand the control finger (32, 34) of the control arms (22, 23) and on the other hand an interlocking key (30) in which the control finger (32, 34) travels, the interlocking key (30) being able to lock the control arms and constituting the actuating part for ratio selection.

7. The system according to Claims 3 and 6, the retractable arm (80) of which is movably mounted by pivot on one of the interlocking key (30) and the disengagement plate (42), a return member (86) tending to return the retractable arm (80) to rest.

8. The system according to Claim 7, the retractable arm (80) of which is integral with the disengagement plate (42) and the stop member (82) is integral with the interlocking key (30).

9. The system according to any one of the preceding claims, in which the retractable arm (80) is in the form of a cam.

10. A control assembly for a gearbox of a vehicle, comprising a lever intended to be in a passenger compartment of a vehicle and being able to travel in the same plane on the engagement or disengagement of the reverse gear ratio and of the highest forward gear ratio, **characterized in that** it comprises a system according to any one of the preceding claims, in which the actuating part for selection (20) is connected to the lever and in which the control finger (32, 34) travels in the same plane on the engagement or disengagement control of the reverse gear ratio and of the highest forward gear ratio.

11. A vehicle comprising a gear box with manual control by a lever mounted in a passenger compartment of the vehicle and being able to travel on the one hand in the same plane on the engagement or disengagement of the reverse gear ratio and of the highest forward gear ratio, and on the other hand in an adjacent parallel plane for the two forward gear ratios immediately lower than the highest ratio, **characterized in that** the lever belongs to a control assembly according to the preceding claim to prevent an accidental passage of the reverse gear on a change of highest forward gear speed ratio to its immediately lower ratio.

## Patentansprüche

1. Steuersystem für Fahrzeuggetriebe, das Steuerwirtel (22, 23) aufweist, die vorgesehen sind, um mit Gabeln (16, 17) des Getriebes verbunden zu werden, und ein abgesichertes System zum Ausrücken (40) des höchsten Vorwärtsgangs des Getriebes, so dass:
- ein Steuermechanismus (20) zum Einrücken und Ausrücken von Gängen mindestens einen Betätigungsteil mit Gangauswahl (30) und einen Steuerfinger (32, 34) der Steuerwirtel (22, 23) mit Gangein- und -ausrücken aufweist;
- das abgesicherte Ausrücksystem (40) des höchsten Gangs einerseits ein Ausrückwirtel (42), das schwenkend auf dem Steuerwirtel (22) montiert ist, das es erlaubt, die Gabel des höchsten Gangs zu verlagern, und andererseits ein Anschlagorgan (82) und einen versenkbaren Arm (80), die das Ausrückwirtel (42) steuern, aufweist, und
- der versenkbare Arm (80) in Ruhestellung und in Berührung mit dem Anschlagorgan (82) es dem Ausrückwirtel (42) erlaubt, eine Position zum Auswählen des hohen Gangs oder des Rückwärtsgangs unter der Steuerung des Betätigungsteils mit Gangauswahl (30) zu belegen,
**dadurch gekennzeichnet, dass** der versenkbare Arm (80) versenkt oder in Berührung mit dem Anschlagorgan (82) es dem Ausrückwirtel (42) erlaubt, eine Ausrückposition des höchsten Gangs zu belegen, bei der der Steuerfinger (32, 34) mit einem Blockierungsflügel (43) in Berührung ist, der zu dem Ausrückwirtel gehört und es dem Steuerfinger beim Ausrücken des hohen Gangs untersagt, den Platz zu belegen, den er beim Einrücken des Rückwärtsgangs belegt.

2. System nach Anspruch 1, **dadurch gekennzeichnet, dass** der versenkbare Arm (80) in Ruhestellung und aus dem Anschlagorgan (82) freigegeben ist, wenn das Steuerwirtel, das es erlaubt, die Gabel des höchsten Gangs zu verlagern, eine Position belegt, die dem eingerückten Zustand des höchsten Gangs entspricht.

3. System nach einem der vorhergehenden Ansprüche, **dadurch gekennzeichnet, dass** der versenkbare Arm (80) fest entweder mit dem Auswahlbetätigungsteil (30) oder dem Ausrückwirtel (42) verbunden ist, und dass das Anschlagorgan (82) fest mit dem anderen, nämlich dem Auswahlbetätigungsteil (30) oder dem Ausrückwirtel (42) verbunden ist.

4. System nach einem der vorhergehenden Ansprüche, dessen Ausrückwirtel (42) durch Zapfen auf dem Steuerwirtel (22), das es erlaubt, die Gabel des höchsten Gangs zu verlagern, beweglich montiert ist, wobei ein Rückhalteorgan (50) dazu tendiert, das Ausrückwirtel (42) zu seiner Ausrückposition zurückzubringen.

5. System nach einem der vorhergehenden Ansprüche, **dadurch gekennzeichnet, dass** das Steuerwirtel (22), das es erlaubt, die Gabel des höchsten Gangs zu verlagern, einen Bügel aufweist, und dass beim Ausrücken des hohen Gangs sowohl der Blockierungsflügel (43), der zum dem Ausrückwirtel (42) gehört, als auch der Steuerfinger (32, 34) den Bügel belegen, wobei der Blockierungsflügel (43) den Platz belegt, den der Steuerfinger beim Einrücken des Rückwärtsgangs einnimmt und wobei der Steuerfinger in Entsprechung mit einem Leerlaufdurchgang der Steuerwirtel ist.

6. System nach einem der vorhergehenden Ansprüche, bei dem:
- der Steuermechanismus zum Einrücken und Ausrücken von Gängen eine Vorrichtung zur gegenseitigen Verriegelung (20) ist, die wahlweise eines der Steuerwirtel (22, 23) betätigen kann, um eine der Gabeln (16, 17) zum Einrücken oder Ausrücken eines Gangs zu verlagern und die anderen Steuerwirtel (22, 23) auf dem Leerlauf zu verriegeln;
- die Vorrichtung zum gegenseitigen Verriegeln (20) einerseits den Steuerfinger (32, 34) der Steuerwirtel (22, 23) aufweist, und andererseits einen Schlüssel zum gegenseitigen Verriegeln (30), in dem der Steuerfinger (32, 34) schlägt, wobei der Schlüssel zum gegenseitigen Verriegeln (30) die Steuerwirtel verriegeln und den Gangauswahlbetätigungsteil bilden kann.

7. System nach den Ansprüchen 3 und 6, bei dem der versenkbare Arm (80) durch Zapfen entweder auf dem Schlüssel zum gegenseitigen Verriegeln (30) oder dem Ausrückwirtel (42) beweglich montiert ist, wobei ein Rückhalteorgan (86) dazu tendiert, den versenkbaren Arm (80) zur Ruhestellung zurückzubringen.

8. System nach Anspruch 7, dessen versenkbarer Arm (80) fest mit dem Ausrückwirtel (42) verbunden ist und das Anschlagorgan (82) fest mit dem Schlüssel zum gegenseitigen Verriegeln (30) verbunden ist.

9. System nach einem der vorhergehenden Ansprüche, bei dem der versenkbare Arm (80) Nockenform hat.

10. Steuereinheit für ein Fahrzeuggetriebe, die einen Hebel aufweist, der dazu bestimmt ist, in einer Fahrzeugfahrgastzelle zu sein und in einer Einrück- oder Ausrückebene des Rückwärtsgangs und des höchsten Vorwärtsgangs ausschlagen kann, **dadurch gekennzeichnet, dass** sie ein System gemäß einem der vorhergehenden Ansprüche aufweist, bei dem der Auswahlbetätigungsteil (20) mit dem Hebel verbunden ist, und bei dem der Steuerfinger (32, 34) in einer gleichen Ebene beim Einrück- oder Ausrücksteuern des Rückwärtsgangs und des höchsten Vorwärtsgangs schlägt.

11. Fahrzeug, das ein Getriebe mit manueller Betätigung durch einen Hebel, der in einer Fahrzeugfahrgastzelle installiert ist, aufweist, und der einerseits in einer gleichen Einrück- oder Ausrückebene des Rückwärtsgangs und des höchsten Vorwärtsgangs ausschlagen kann, und andererseits in einer Ebene parallel daneben für die zwei dazwischenliegenden Vorwärtsgänge, die niedriger sind als der höchste Gang, **dadurch gekennzeichnet, dass** der Hebel zu einer Steuereinheit gemäß dem vorhergehenden Anspruch gehört, um ein zufälliges Einrücken des Rückwärtsgangs bei einem Gangwechsel von dem höchsten Vorwärtsgang zu seinem gleich darunter liegenden Gang zu untersagen.
